# EUROPEAN PATENT SPECIFICATION

(11) **EP 3 091 789 B1**
(45) Date of publication and mention of the grant of the patent: **15.04.2020**
(21) Application number: 14880540.1
(22) Date of filing: 28.01.2014
(51) Int. Cl.: H04W 48/16, H04W 48/12

(54) **SYSTEM INFORMATION SCHEDULING METHOD AND USER DEVICE**
SYSTEMINFORMATIONSPLANUNGSVERFAHREN UND BENUTZERVORRICHTUNG
PROCEDE D'ORDONNANCEMENT DE DONNEES SYSTEME ET DISPOSITIF UTILISATEUR

(43) Date of publication of application: 09.11.2016
(73) Proprietor: Huawei Technologies Co., Ltd., Longgang District Shenzhen, Guangdong 518129 (CN)
(72) Inventor: PANG, Lingli, Shenzhen Guangdong 518129 (CN); ZHENG, Xiaoxiao, Shenzhen Guangdong 518129 (CN)
(74) Representative: Epping - Hermann - Fischer
(86) International application number: PCT/CN2014/071690
(87) International publication number: WO 2015/113219

(56) References cited:
- CN-A- 103 428 813
- CN-A- 103 534 970
- US-A1- 2009 219 860
- US-A1- 2011 019 615
- US-A1- 2012 039 256
- US-A1- 2013 128 841
- US-A1- 2013 208 673
- HUAWEI ET AL: "Further considerations on BCH2 mechanism", 3GPP DRAFT; R2-141419 FURTHER CONSIDERATIONS ON BCH2 MECHANISM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Valencia, Spain; 20140331 - 20140404 21 March 2014 (2014-03-21), XP050817511, Retrieved from the Internet: URL:http://www.3gpp.org/ftp/tsg_ran/WG2_RL 2/TSGR2_85bis/Docs/ [retrieved on 2014-03-21]

## Description

### TECHNICAL FIELD

The present invention relates to the communications field, and in particular, to a system information scheduling method, and user equipment.

### BACKGROUND

In the prior art, system information (including a master information block (Master information Block, MIB), a scheduling block (Scheduling Block, SB), and a system information block (System information Block, SIB)) is sent periodically by using one primary common control physical channel (Primary Common Control Physical Channel, P-CCPCH), where scheduling information such as a period of each SIB in the system information and a location of a segmentation block is included in the master information block MIB or the SB. In the prior art, when user equipment needs to acquire an SIB, the user equipment first acquires an MIB/SB on a P-CCPCH, to obtain scheduling information of the SIB to be acquired. Then, the UE may acquire a specific location of a segmentation block of each SIB according to the scheduling information, obtain an entire SIB after acquiring and sequencing all segmentation blocks, and parse the SIB. As content of the system information increases, in some cases, a single P-CCPCH channel cannot satisfy a bearing requirement of a newly-added SIB; therefore, a new channel used for bearing system information needs to be introduced. Currently, how to schedule system information borne on a newly-added system channel is a technical problem to be solved. US 2009/0219860 A1 relates to a base station for generating and transmitting system information to a mobile station. It also relates to a communication method of communicating system information in a communication system including the base station and the mobile station. The base station generates system information; categorizes the system information into multiple pieces of system information; multiplexes the categorized multiple pieces of system information into multiple channels or multiple blocks; and transmits the system information on the multiple channels or the multiple blocks. The mobile station receives system information included in a portion of the multiple channels or the multiple blocks.

US 2012/0039256 A1 relates to a wireless communication system. More particularly, it relates to a method for transmitting system information in which a base station that supports a legacy system and an improved-functions legacy system having one or more functions added thereto, transmits system information, wherein said system information transmitting method comprises a step of transmitting a broadcast channel, containing system information for supporting user equipment for the legacy system, in a predetermined number of symbols which follow the synchronous channel in a first subframe of a wireless frame containing a plurality of subframes; and a step of transmitting additional system information for supporting user equipment for the improved system in a second subframe, excluding the first subframe, from among the plurality of subframes.

US 2013/0128841 A1 relates to a method for computer-aided mapping of system information medium access control protocol messages onto a plurality of transport channels for transmission using an orthogonal frequency division multiple access method, wherein a scheduling of system information data packets information in the context of the mapping on a transport channel of the plurality of transport channels is carried out dependent on the type of the system information.

US 2013/0208673 A1 discloses that a method and transmission apparatus transmit broadcast system information in a mobile communication system. Further, a method and mobile terminal receive the broadcast system information. An improved method for broadcasting broadcast system information maps different partitions of broadcast system information to a shared transport channel or a broadcast transport channel for transmission. The mapping may take into account parameters inherent to the mobile terminals to which the broadcast system information is to be transmitted and/or parameters inherent to the different partitions of broadcast system information.

US 2011/0019615 A1 relates to a method of controlling user equipment in a wireless communications network, the method comprising: producing different system information for different groups of user equipment based on characteristics of the user equipment, sending the system information to said user equipment, and indicating to which group of the user equipment the system information is addressed.

### SUMMARY

In view of this, the present invention provides a system information scheduling method, and user equipment according to the attached claims, which can schedule system information based on a second broadcast channel which is different from a first broadcast channel, and extend bearing space of the system information.

A first aspect provides a system information scheduling method, which may include:
determining that a second broadcast channel which is different from a first broadcast channel exists;
acquiring, by user equipment, second scheduling information from system information that is sent on the first broadcast channel or the second broadcast channel; and
acquiring, by the user equipment, content of the second scheduling information, and receiving, according to the content of the second scheduling information, the system information that is sent on the second broadcast channel.

With reference to the first aspect, in a first feasible implementation manner, the determining that a second broadcast channel which is different from a first broadcast channel exists includes:
determining, according to indication information carried in the system information on the first broadcast channel, that the second broadcast channel exists;
or,
determining, according to locally-stored information about the second broadcast channel, that the second broadcast channel exists.

With reference to the first feasible implementation manner of the first aspect, in a second feasible implementation manner,
the indication information includes an identifier used for indicating that the second broadcast channel exists; or
the indication information includes configuration information of the second broadcast channel; or
the indication information includes the second scheduling information.

With reference to any one of the first aspect to the second feasible implementation manner of the first aspect, in a third feasible implementation manner,
before the acquiring, by user equipment, second scheduling information from the second broadcast channel, the method includes:
acquiring, by the user equipment from the system information on the first broadcast channel, first scheduling information corresponding to the second scheduling information, where the first scheduling information includes a sending location and/or sending period of the second scheduling information on the second broadcast channel; and
acquiring, by the user equipment according to the acquired sending location and/or sending period of the second scheduling information, the second scheduling information borne on the second broadcast channel.

With reference to any one of the first aspect to the second feasible implementation manner of the first aspect, in a fourth feasible implementation manner,
before the acquiring, by user equipment, second scheduling information from the second broadcast channel, the method includes:
agreeing, by the user equipment, with a radio network controller on a location and/or period for sending the second scheduling information, borne on the second broadcast channel, on the second broadcast channel; and
the acquiring, by user equipment, second scheduling information from the second broadcast channel includes:
   acquiring, by the user equipment, the second scheduling information according to the agreed location and/or period of the second scheduling information on the second broadcast channel.

A second aspect of the disclosure provides user equipment, which may include:
a determining module, configured to determine that a second broadcast channel which is different from a first broadcast channel exists;
a scheduling information acquiring module, configured to acquire second scheduling information from system information on the first broadcast channel or the second broadcast channel that is determined by the determining module; and
a content acquiring module, configured to acquire content of the second scheduling information, and receive, according to the content of the second scheduling information, the system information that is sent on the second broadcast channel.

With reference to the second aspect, in a first feasible implementation manner, the determining module is specifically configured to:
determine, according to indication information carried in the system information on the first broadcast channel, that the second broadcast channel exists; or, determine, according to locally-stored information about the second broadcast channel, that the second broadcast channel exists.

With reference to the first feasible implementation manner of the second aspect, in a second feasible implementation manner,
the indication information includes an identifier used for indicating that the second broadcast channel exists; or
the indication information includes configuration information of the second broadcast channel; or
the indication information includes the second scheduling information.

With reference to any one of the second aspect to the second feasible implementation manner of the second aspect, in a third feasible implementation manner, the user equipment further includes:
a scheduling information guide acquiring module, configured to acquire, from the system information on the first broadcast channel, first scheduling information corresponding to the second scheduling information, where the first scheduling information includes a sending location and/or sending period of the second scheduling information on the second broadcast channel; where
the scheduling information acquiring module is specifically configured to read the second scheduling information according to the sending location and/or sending period acquired by the scheduling information guide acquiring module.

With reference to any one of the second aspect to the second feasible implementation manner of the second aspect, in a fourth feasible implementation manner, the user equipment further includes:
an agreeing module, configured to agree with a radio network controller on a location and/or period of the second scheduling information, in the system information borne on the second broadcast channel, on the second broadcast channel, where
the scheduling information acquiring module is specifically configured to acquire the second scheduling information on the second broadcast channel according to the location and/or period, agreed by the agreeing module, of the second scheduling information on the second broadcast channel.

A third aspect of the disclosure provides user equipment, which may include a communications interface, a memory, and a processor, where the processor invokes a program stored in the memory and performs the following steps:
determining that a second broadcast channel which is different from a first broadcast channel exists;
acquiring second scheduling information from system information on the first broadcast channel or the second broadcast channel through the communications interface; and
acquiring content of the second scheduling information, and receiving, according to the content of the second scheduling information, the system information that is sent on the second broadcast channel.

With reference to the third aspect, in a first feasible implementation manner, the processor specifically determines, according to indication information carried in the system information on the first broadcast channel, that the second broadcast channel exists; or, determines, according to locally-stored information about the second broadcast channel, that the second broadcast channel exists.

With reference to the first feasible implementation manner of the third aspect, in a second feasible implementation manner,
the indication information includes an identifier used for indicating that the second broadcast channel exists; or
the indication information includes configuration information of the second broadcast channel; or
the indication information includes the second scheduling information.

With reference to any one of the third aspect to the second feasible implementation manner of the third aspect, in a third feasible implementation manner, before acquiring the second scheduling information from the second broadcast channel through the communications interface, the processor further performs the following operations:
acquiring, by the processor, a sending location and/or sending period of the second scheduling information on the second broadcast channel from the system information on the first broadcast channel through the communications interface; and
specifically acquiring, by the processor, the second scheduling information according to the acquired sending location and/or sending period.

With reference to any one of the third aspect to the second feasible implementation manner of the third aspect, in a fourth feasible implementation manner, before acquiring the second scheduling information from the second broadcast channel through the communications interface, the processor further performs the following operations:
agreeing, by the processor through the communications interface, with a radio network controller on a location and/or period of the second scheduling information on the second broadcast channel; and
specifically acquiring, by the processor, the second scheduling information according to the agreed location and/or period of the second scheduling information on the second broadcast channel.

A fourth aspect of the disclosure provides a computer storage medium, where the computer storage medium may store a program; and when the program is executed, some or all steps of the method described in the embodiments of the present invention may be performed. As can be seen from the above, in some feasible implementation manners of the present invention, it is determined that a second broadcast channel which is different from a first broadcast channel exists; user equipment acquires second scheduling information from system information that is sent on the first broadcast channel or the second broadcast channel; the user equipment acquires content of the second scheduling information and receives, according to the content of the second scheduling information, the system information that is sent on the second broadcast channel. Therefore, the system information can be sent based on the second broadcast channel which is different from the first broadcast channel, and bearing space of the system information can be extended.

### BRIEF DESCRIPTION OF DRAWINGS

FIG. 1 is a schematic flowchart of an embodiment of a system information scheduling method according to the present invention;
FIG. 2 is a schematic diagram of a bearing manner of second scheduling information in system information on a second broadcast channel according to the present invention;
FIG. 3 is another schematic diagram of a bearing manner of second scheduling information in system information on a second broadcast channel according to the present invention;
FIG. 4 is still another schematic diagram of a bearing manner of second scheduling information in system information on a second broadcast channel according to the present invention;
FIG. 5 is a schematic structural diagram of an embodiment of user equipment according to the present invention;
FIG. 6 is a schematic structural diagram of another embodiment of user equipment according to the present invention;
FIG. 7 is a schematic structural diagram of still another embodiment of user equipment according to the present invention; and
FIG. 8 is a schematic structural diagram of yet another embodiment of user equipment according to the present invention.

### DESCRIPTION OF EMBODIMENTS

During specific implementation, in embodiments of the present invention, a radio network controller (Radio Network Controller, RNC) may send scheduling information of each piece of system information (for example, an MIB, an SB, or an SIB) to a base station; meanwhile, the RNC further sends, to the base station, indication information indicating on which channel of a first broadcast channel and/or a second broadcast channel each piece of system information is sent. Therefore, after receiving the indication information delivered by the RNC, the base station may send system information on a corresponding channel, and carry information such as a location and period of other system information in the system information. As an embodiment, the RNC may add, by using an IB type field in a System information Update message, indication information indicating on which channel of the first broadcast channel and/or the second broadcast channel the SIB is sent. During specific implementation, the RNC may also carry, by using another message or another field, the indication information indicating on which channel of the first broadcast channel and/or the second broadcast channel the SIB is sent, and these manners are not listed one by one.

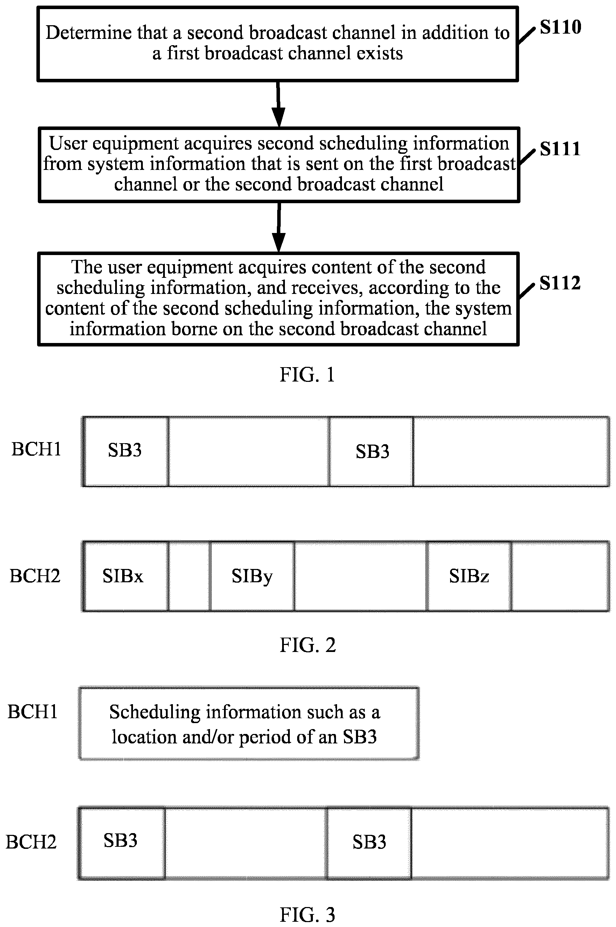

During specific implementation, the first broadcast channel in the embodiments of the present invention may include a P-CCPCH, and the second broadcast channel in the embodiments of the present invention may include any one of a P-CCPCH, a high speed physical downlink shared channel (High Speed Physical Downlink Shared Channel, HS-PDSCH), and a secondary common control physical channel (Secondary Common Control Physical Channel, S-CCPCH). FIG. 1 is a schematic flowchart of an embodiment of a system information scheduling method according to the present invention. As shown in FIG. 1, the method may include:
Step S110: Determine that a second broadcast channel which is different from a first broadcast channel exists.
Step S111: User equipment acquires second scheduling information from system information that is sent on the first broadcast channel or the second broadcast channel.
Step S112: The user equipment acquires content of the second scheduling information, and receives, according to the content of the second scheduling information, the system information borne on the second broadcast channel.

During specific implementation, in step S110, the user equipment reads the system information that is sent on the first broadcast channel, and determines whether there is indication information used for indicating that the second broadcast channel exists; if there is the indication information, it may be determined that the second broadcast channel exists; if there is no indication information, the second broadcast channel may not exist. Alternatively, during specific implementation, in step S110, the user equipment may determine, according to locally-stored information about the second broadcast channel, that the second broadcast channel exists. For example, the user equipment detects the second broadcast channel according to a stored channelization code of the second broadcast channel. Specifically, in this embodiment of the present invention, the indication information used for indicating that the second broadcast channel exists may specifically include: an identifier used for indicating that the second broadcast channel exists; or configuration information of the second broadcast channel; or the second scheduling information (for example, if second scheduling information of a system information block on the second broadcast channel is an SB3, the indication information may be the SB3; if the SB3 is sent on the first broadcast channel, it indicates that the second broadcast channel exists; otherwise, the second broadcast channel does not exist.). Further, the indication information may be carried in an MIB or SIB (for example, an SIB5) in the system information that is sent on the first broadcast channel.

During specific implementation, in step Sill, the user equipment may acquire the second scheduling information from the system information on the first broadcast channel. For example, for the system information borne on the second broadcast channel, the user equipment may acquire the SB3 from the MIB and the SB on the first broadcast channel, and further acquire, by using the SB3, scheduling information such as a location and/or period of the system information borne on the second broadcast channel. For another example, if an MIB for the system information on the second broadcast channel is sent on the second broadcast channel, for an MIB borne on the second broadcast channel, the user equipment may acquire the second scheduling information SB3 from an MIB or SIB3 on the first broadcast channel, and further acquire, by using the SB3, scheduling information such as a location and/or period of the MIB borne on the second broadcast channel. Referring to an example in FIG. 2, in FIG. 2, a BCH1 represents the first broadcast channel, a BCH2 represents the second broadcast channel, second scheduling information of an SIB on the BCH2 is an SB3, and SIBx and SIBy are specific SIBs sent on the BCH2. As can be known from FIG. 2, the second scheduling information SB3 of the SIB on the BCH2 is borne on the first broadcast channel BCH1.

During specific implementation, in step Sill, the user equipment may also acquire the second scheduling information from the system information on the second broadcast channel. Optionally, the scheduling information such as a location for sending the second scheduling information on the second broadcast channel may be implemented in a manner of pre-agreeing with a network. As a feasible implementation manner, in the present invention, before step Sill, the method may further include: acquiring, by the user equipment from the system information on the first broadcast channel, first scheduling information corresponding to the second scheduling information, where the first scheduling information includes a sending location and/or sending period of the second scheduling information on the second broadcast channel. For example, the user equipment may acquire, from an MIB, SB, or SIB5 on the first broadcast channel, information about a sending location and/or period of the second scheduling information SB3 on the second broadcast channel. Further, in step S111, the user equipment can acquire, according to the sending location and/or sending period that is of the SB3 on the second broadcast channel and acquired from the first broadcast channel, the SB3 borne on the second broadcast channel. Referring to an example in FIG. 3, in FIG. 3, a BCH1 represents the first broadcast channel, a BCH2 represents the second broadcast channel, second scheduling information of an SIB on the BCH2 is an SB3; in FIG. 3, the SB3 is specifically sent on the BCH2, while scheduling information such as a location and/or period for sending the SB3 on the BCH2 is borne on the first broadcast channel BCH1.

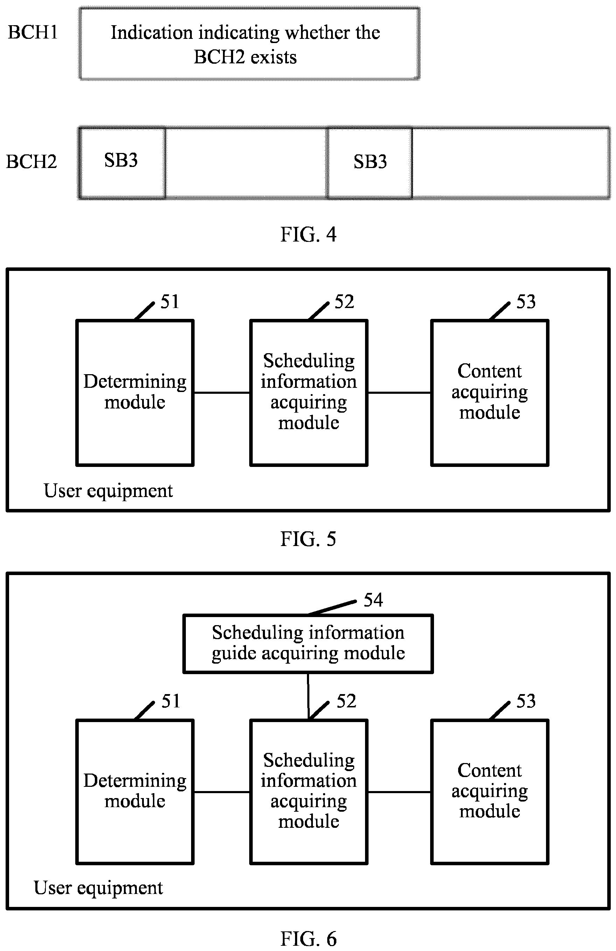

As another feasible implementation manner, in this embodiment of the present invention, before step S111, the method may further include: agreeing, by the user equipment, with a radio network controller on a location and/or period of the second scheduling information on the second broadcast channel. For example, it is still assumed that the second scheduling information of the system information block on the second broadcast channel is carried in a scheduling block SB3; then, before step S111, the user equipment may agree with the radio network controller RNC on the location and/or period of the SB3 on the second broadcast channel. In this way, in step S111, the user equipment acquires the SB3 according to the agreed location and/or period of the second scheduling information SB3 on the second broadcast channel. Referring to an example in FIG. 4, in FIG. 4, a BCH1 represents the first broadcast channel, a BCH2 represents the second broadcast channel, second scheduling information of an SIB on the BCH2 is an SB3; in FIG. 4, the SB3 is specifically sent on the BCH2, while scheduling information such as a location and/or period for sending the SB3 on the BCH2 is pre-agreed by the user equipment with the RNC that is on a network. In this example, the BCH1 bears indication information indicating whether the BCH2 exists. During specific implementation, in step S112, after content of the second scheduling information is acquired, system information finally required by the user equipment may be received according to the information such as the location and/or period, indicated in the second scheduling information, of the system information (an MIB, SB, or SIB) borne on the second broadcast channel.

During specific implementation, in this embodiment of the present invention, the second scheduling information may include a location and period of the system information, or may also include other information, which is not limited herein.

In step S112, the receiving, according to the content of the second scheduling information, the system information borne on the second broadcast channel refers to: after acquiring the content of the second scheduling information, obtaining, by user equipment supporting reading of the second broadcast channel, a sending location of a system information block according to scheduling information of the system information block that the user equipment needs to read, and receiving the system information block at the sending location. If the user equipment does not need to acquire the system information block included in the scheduling information, the user equipment does not need to receive the system information borne on the second broadcast channel.

To sum up, in some feasible implementation manners of the present invention, it is determined that a second broadcast channel which is different from a first broadcast channel exists; user equipment acquires second scheduling information from system information that is sent on the first broadcast channel or the second broadcast channel; the user equipment acquires content of the second scheduling information and receives, according to the content of the second scheduling information, the system information that is sent on the second broadcast channel. Therefore, the system information can be sent based on the second broadcast channel which is different from the first broadcast channel, and bearing space of the system information can be extended.

FIG. 5 is a schematic structural diagram of an embodiment of user equipment according to the present invention. As shown in FIG. 5, the user equipment may include a determining module 51, a scheduling information acquiring module 52, and a content acquiring module 53.

The determining module 51 is configured to determine that a second broadcast channel which is different from a first broadcast channel exists.

The scheduling information acquiring module 52 is configured to acquire second scheduling information from system information on the first broadcast channel or the second broadcast channel that is determined by the determining module 51.

The content acquiring module 53 is configured to acquire content of the second scheduling information acquired by the scheduling information acquiring module 52, and receive, according to the content of the second scheduling information, system information borne on the second broadcast channel.

During specific implementation, the determining module 51 reads the system information that is sent on the first broadcast channel, and determines whether there is indication information used for indicating that the second broadcast channel exists; if there is the indication information, it may be determined that the second broadcast channel exists; if there is no indication information, the second broadcast channel may not exist. Alternatively, during specific implementation, the determining module 51 may determine, according to locally-stored information about the second broadcast channel, that the second broadcast channel exists. For example, the determining module 51 may detect the second broadcast channel according to a stored channelization code of the second broadcast channel. Specifically, in this embodiment of the present invention, the indication information used for indicating that the second broadcast channel exists may specifically include: an identifier used for indicating that the second broadcast channel exists; or configuration information of the second broadcast channel; or the second scheduling information (for example, if second scheduling information of a system information block on the second broadcast channel is an SB3, the indication information may be the SB3; if the SB3 is sent on the first broadcast channel, it indicates that the second broadcast channel exists; otherwise, the second broadcast channel does not exist.). Further, the indication information may be carried in an MIB or SIB (for example, an SIB5) in the system information that is sent on the first broadcast channel.

During specific implementation, the scheduling information acquiring module 52 specifically may be configured to acquire the second scheduling information from the system information on the first broadcast channel, for example, the user equipment may acquire an SB3 on the second broadcast channel from the MIB or SB on the first broadcast channel, and further acquire, by using the SB3, the scheduling information such as the location and/or period of the system information borne on the second broadcast channel. For another example, if an MIB for the system information on the second broadcast channel is sent on the second broadcast channel, for an MIB borne on the second broadcast channel, the scheduling information acquiring module 22 may acquire the second scheduling information SB3 from an MIB or SIB3 on the first broadcast channel, and further acquire, by using the SB3, scheduling information such as a location and/or period of the MIB borne on the second broadcast channel. Referring to an example in FIG. 2, in FIG. 2, a BCH1 represents the first broadcast channel, a BCH2 represents the second broadcast channel, second scheduling information of an SIB on the BCH2 is an SB3, and SIBx and SIBy are specific SIBs sent on the BCH2. As can be known from FIG. 2, the second scheduling information SB3 of the SIB on the BCH2 is borne on the first broadcast channel BCH1.

During specific implementation, as shown in FIG. 6, if the scheduling information acquiring module 52 specifically may be configured to acquire the second scheduling information from the system information on the second broadcast channel determined by the determining module 51, the user equipment in the present invention may further include:
a scheduling information guide acquiring module 54, configured to acquire, from the system information on the first broadcast channel, first scheduling information corresponding to the second scheduling information, where the first scheduling information includes a sending location and sending period of the second scheduling information on the second broadcast channel; optionally, the information such as the location for sending the second scheduling information on the second broadcast channel may be implemented in a manner of pre-agreeing with a network. Referring to an example in FIG. 3, in FIG. 3, a BCH1 represents the first broadcast channel, a BCH2 represents the second broadcast channel, second scheduling information of an SIB on the BCH2 is an SB3; in FIG. 3, the SB3 is specifically sent on the BCH2, while scheduling information such as a location and/or period for sending the SB3 on the BCH2 is borne on the first broadcast channel BCH1.

In this case, the scheduling information acquiring module 52 is specifically configured to acquire the second scheduling information according to the sending location and/or sending period acquired by the scheduling information guide acquiring module.

For example, the scheduling information guide acquiring module 54 may acquire information about the sending location and/or period of the SB3 of a second system information block on the second broadcast channel from an MIB, SB, or SIB5 on the first broadcast channel, and further the scheduling information acquiring module 52 may read, according to the sending location and/or sending period that is of the SB3 on the second broadcast channel and acquired from the first broadcast channel, the SB3 borne on the second broadcast channel.

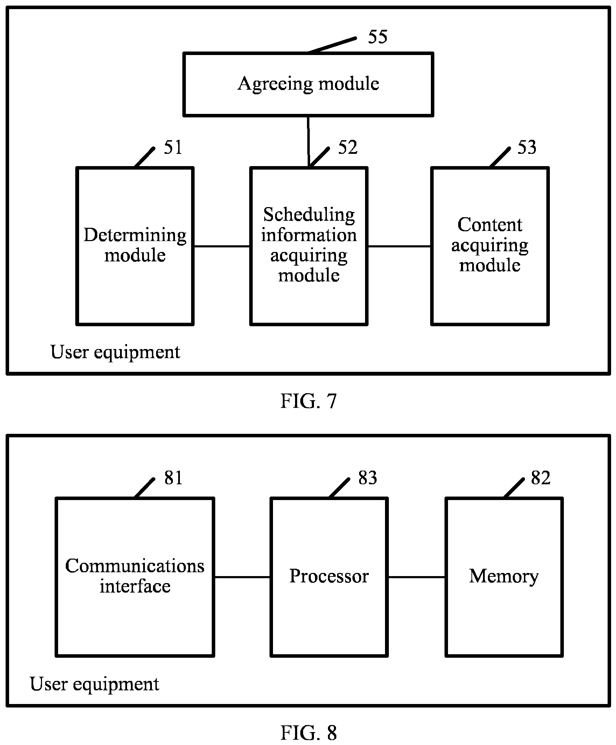

During specific implementation, as shown in FIG. 7, if the scheduling information acquiring module 52 specifically may be configured to acquire the second scheduling information from the system information on the second broadcast channel determined by the determining module 51, the user equipment in the present invention may further include:
an agreeing module 55, configured to agree with a radio network controller on a location and/or period of the second scheduling information on the second broadcast channel, where
the scheduling information acquiring module 52 is specifically configured to acquire, according to the location and/or period, agreed by the agreeing module 55, of the second scheduling information on the second broadcast channel, the second scheduling information borne on the second broadcast channel.

For example, it is still assumed that the scheduling information of the system information block on the second broadcast channel is carried in a scheduling block SB3, and then, the agreeing module 55 may agree with the radio network controller RNC on the location and/or period of the SB3 on the second broadcast channel. In this way, the scheduling information acquiring module 52 may read, according to the agreed location and/or period of the scheduling information SB3 on the second broadcast channel, the scheduling information SB3 on the second broadcast channel. Referring to an example in FIG. 4, in FIG. 4, a BCH1 represents the first broadcast channel, a BCH2 represents the second broadcast channel, second scheduling information of an SIB on the BCH2 is an SB3; in FIG. 4, the SB3 is specifically sent on the BCH2, while scheduling information such as a location and/or period for sending the SB3 on the BCH2 is pre-agreed by the user equipment with the RNC that is on a network. In this example, the BCH1 bears indication information indicating whether the BCH2 exists.

During specific implementation, the content acquiring module 53 specifically may receive, according to the information such as the location and/or period, indicated in the second scheduling information, of the system information (an MIB, SB, or SIB) borne on the second broadcast channel, system information finally required by the user.

During specific implementation, in this embodiment of the present invention, the second scheduling information may include a location and period of the system information, or may also include other information, which is not limited herein.

During specific implementation, the receiving, by the content acquiring module 53 according to the content of the second scheduling information, the system information borne on the second broadcast channel refers to: after acquiring the content of the second scheduling information, obtaining, by user equipment supporting reading of the second broadcast channel, a sending location of a system information according to scheduling information of the system information block that the user equipment needs to read, and receiving the system information block at the sending location. If the user equipment does not need to acquire the system information block included in the scheduling information, the user equipment does not need to receive the system information borne on the second broadcast channel.

To sum up, in some feasible implementation manners of the present invention, it is determined that a second broadcast channel which is different from a first broadcast channel exists; user equipment acquires second scheduling information from system information that is sent on the first broadcast channel or the second broadcast channel; the user equipment acquires content of the second scheduling information and receives, according to the content of the second scheduling information, the system information that is sent on the second broadcast channel. Therefore, the system information can be sent based on the second broadcast channel which is different from the first broadcast channel, and bearing space of the system information can be extended.

FIG. 8 is a schematic structural diagram of another embodiment of user equipment according to the present invention. As shown in FIG. 8, the user equipment may include a communications interface 81, a memory 82, and a processor 83, where the processor 83 invokes a program stored in the memory and performs the following steps:
determining that a second broadcast channel which is different from a first broadcast channel exists; and acquiring second scheduling information from system information on the first broadcast channel or the second broadcast channel through the communications interface; and
acquiring content of the second scheduling information, and receiving, according to the content of the second scheduling information, the system information that is sent on the second broadcast channel.

In some feasible implementation manners, the processor 83 specifically determines, according to indication information carried in the system information on the first broadcast channel, that the second broadcast channel which is different from the first broadcast channel exists; or, determines, according to locally-stored information about the second broadcast channel, that the second broadcast channel exists.

In some feasible implementation manners, the indication information includes an identifier used for indicating that the second broadcast channel exists; or, the indication information includes configuration information of the second broadcast channel; or, the indication information includes the second scheduling information.

In some feasible implementation manners, before acquiring the second scheduling information from the second broadcast channel through the communications interface 81, the processor 83 further performs the following operations:
acquiring, by the processor 83 from the system information on the first broadcast channel through the communications interface 81, first scheduling information corresponding to the system information borne on the second broadcast channel, where the first scheduling information includes a sending location and/or sending period of the second scheduling information on the second broadcast channel; and
specifically acquiring, by the processor 83, the second scheduling information according to the acquired sending location and/or sending period.

In some feasible implementation manners, before acquiring the second scheduling information from the second broadcast channel through the communications interface 81, the processor 83 further performs the following operations:
agreeing, by the processor 83 through the communications interface 81, with a radio network controller on a location and/or period of the second scheduling information on the second broadcast channel; and
specifically acquiring, by the processor 83, the second scheduling information according to the agreed location and/or period of the second scheduling information on the second broadcast channel.

In addition, an embodiment of the present invention further provides a computer storage medium, where the computer storage medium may store a program; and when the program is executed, some or all steps of the method described in the embodiments of the present invention may be performed.

Obviously, a person skilled in the art can make various modifications and variations to the present invention without departing from the scope of the present invention. The present invention is intended to cover these modifications and variations provided that they fall within the scope of protection defined by the following claims.

## Claims

1. A system information scheduling method, comprising:
determining (S110), by a user equipment, that a second broadcast channel (BCH2) which is different from a first broadcast channel (BCH1) exists;
acquiring, by the user equipment from system information on the first broadcast channel (BCH1), first scheduling information corresponding to second scheduling information, wherein the first scheduling information comprises at least one of a sending location and sending period of the second scheduling information on the second broadcast channel (BCH2), or agreeing, by the user equipment, with a radio network controller on at least one of a sending location and sending period for sending the second scheduling information on the second broadcast channel (BCH2);
acquiring (S111), by user equipment according to the at least one of the sending location and sending period of the second scheduling information, the second scheduling information, wherein the second scheduling information is carried in a scheduling block (SB3) borne on the second broadcast channel (BCH2); and
acquiring (S112), by the user equipment, content of the scheduling block (SB3), and receiving, according to the content of the scheduling block (SB3), a specific system information block (SIBx, SIBy,SIBz) that is sent on the second broadcast channel (BCH2).

2. The system information scheduling method according to claim 1, wherein the determining that the second broadcast channel (BCH2) which is different from the first broadcast channel (BCH1) exists comprises:
determining, by the user equipment, according to locally-stored information about the second broadcast channel (BCH2), that the second broadcast channel (BCH2) exists.

3. The system information scheduling method according to claim 2, wherein the user equipment detects the second broadcast channel (BCH2) according to a stored channelization code of the second broadcast channel (BCH2).

4. The system information scheduling method according to claim 1, wherein the determining that the second broadcast channel (BCH2) which is different from the first broadcast channel (BCH1) exists comprises:
determining, according to indication information carried in the system information on the first broadcast channel (BCH1), that the second broadcast channel (BCH2) exists.

5. The system information scheduling method according to claim 4, wherein
the indication information comprises an identifier used for indicating that the second broadcast channel (BCH2) exists.

6. The system information scheduling method according to claim 4, wherein
the indication information comprises configuration information of the second broadcast channel (BCH2).

7. User equipment, comprising:
a determining module (51), configured to determine that a second broadcast channel (BCH2) which is different from a first broadcast channel (BCH1) exists;
a scheduling information guide acquiring module (54), configured to acquire, from the system information on the first broadcast channel (BCH1), first scheduling information corresponding to the second scheduling information, wherein the first scheduling information comprises at least one of a sending location and sending period of the second scheduling information on the second broadcast channel (BCH2), or an agreeing module (55), configured to agree with a radio network controller on at least one of a location and period of the second scheduling information, in the system information borne on the second broadcast channel (BCH2), on the second broadcast channel (BCH2),
a scheduling information acquiring module (52), configured to acquire second scheduling information from the second broadcast channel (BCH2) that is determined by the determining module (51), wherein the scheduling information acquiring module (52) is specifically configured to read the second scheduling information according to the at least one of the sending location and sending period acquired by the scheduling information guide acquiring module (54) or to acquire the second scheduling information on the second broadcast channel (BCH2) according to the at least one of the location and period, agreed by the agreeing module (55), of the second scheduling information on the second broadcast channel (BCH2), respectively, wherein the second scheduling information is carried in a scheduling block (SB3) borne on the second broadcast channel (BCH2); and
a content acquiring module (53), configured to acquire content of the scheduling block (SB3), and receive, according to the content of the scheduling block (SB3), a specific system information block (SIBx, SIBy,SIBz) that is sent on the second broadcast channel (BCH2).

8. The user equipment according to claim 7, wherein the determining module (51) is further configured todetermine, according to locally-stored information about the second broadcast channel (BCH2), that the second broadcast channel exists (BCH2).

9. The user equipment according to claim 8, wherein the determining module (51) is specifically configured to detect the second broadcast channel (BCH2) according to a stored channelization code of the second broadcast channel (BCH2).

10. The user equipment according to claim 7, wherein the determining module (51) is further configured to determine, according to indication information carried in the system information on the first broadcast channel (BCH1), that the second broadcast channel (BCH2) exists.

11. The user equipment according to claim 10, wherein
the indication information comprises an identifier used for indicating that the second broadcast channel (BCH2) exists.

12. The user equipment according to claim 10, wherein
the indication information comprises configuration information of the second broadcast channel (BCH2).

13. A computer storage medium, wherein the computer storage medium stores a program; the program comprising instructions to cause the device of claims 7-12 to execute the steps of method claims 1-6.

## Patentansprüche

1. Systeminformationsplanungsverfahren, Folgendes umfassend:
Bestimmen (S110), durch ein Benutzergerät, dass ein zweiter Übertragungskanal (BCH2), der sich von einem ersten Übertragungskanal (BCH1) unterscheidet, vorhanden ist;
Erwerben, durch das Benutzergerät von Systeminformationen auf dem ersten Übertragungskanal (BCH1), von ersten Planungsinformationen, die zweiten Planungsinformationen entsprechen, wobei die ersten Planungsinformationen zumindest eines von einem Sendeort und einem Sendezeitraum der zweiten Planungsinformationen auf dem zweiten Übertragungskanal (BCH2) umfassen, oder Übereinstimmen, durch das Benutzergerät, mit einer Funknetzwerk-Steuereinrichtung auf zumindest einem von einem Sendeort und einem Sendezeitraum zum Senden der zweiten Planungsinformationen auf dem zweiten Übertragungskanal (BCH2);
Erwerben (S111), durch das Benutzergerät gemäß dem zumindest einen von dem Sendeort und dem Sendezeitraum der zweiten Planungsinformationen, der zweiten Planungsinformationen, wobei die zweiten Planungsinformationen in einem Planungsblock (SB3) enthalten sind, der auf dem zweiten Übertragungskanal (BCH2) getragen wird; und
Erwerben (S112), durch das Benutzergerät, von Inhalt des Planungsblocks (SB3), und Empfangen, gemäß dem Inhalt des Planungsblocks (SB3), eines spezifischen Systeminformationsblocks (SIBx, SIBy, SIBz), der auf dem zweiten Übertragungskanal (BCH2) gesendet wird.

2. Systeminformationsplanungsverfahren nach Anspruch 1, wobei das Bestimmen, dass der zweite Übertragungskanal (BCH2), der sich von dem ersten Übertragungskanal (BCH1) unterscheidet, vorhanden ist, Folgendes umfasst:
Bestimmen, durch das Benutzergerät, gemäß lokal gespeicherten Informationen über den zweiten Übertragungskanal (BCH2), dass der zweite Übertragungskanal (BCH2) vorhanden ist.

3. Systeminformationsplanungsverfahren nach Anspruch 2, wobei das Benutzergerät den zweiten Übertragungskanal (BCH2) gemäß einem gespeicherten Kanalisierungscode des zweiten Übertragungskanals (BCH2) erfasst.

4. Systeminformationsplanungsverfahren nach Anspruch 1, wobei das Bestimmen, dass der zweite Übertragungskanal (BCH2), der sich von dem ersten Übertragungskanal (BCH1) unterscheidet, vorhanden ist, Folgendes umfasst:
Bestimmen, gemäß Angabeinformationen, die in den Systeminformationen auf dem ersten Übertragungskanal (BCH1) enthalten sind, dass der zweite Übertragungskanal (BCH2) vorhanden ist.

5. Systeminformationsplanungsverfahren nach Anspruch 4, wobei die Angabeinformationen eine Kennung umfassen, die verwendet wird, um anzugeben, dass der zweite Übertragungskanal (BCH2) vorhanden ist.

6. Systeminformationsplanungsverfahren nach Anspruch 4, wobei die Angabeinformationen Konfigurationsinformationen des zweiten Übertragungskanals (BCH2) umfassen.

7. Benutzergerät, umfassend:
ein Bestimmungsmodul (51), das konfiguriert ist, um zu bestimmen, dass ein zweiter Übertragungskanal (BCH2), der sich von einem ersten Übertragungskanal (BCH1) unterscheidet, vorhanden ist;
ein Planungsinformationsführungserwerbsmodul (54), das konfiguriert ist, um von den Systeminformationen auf dem ersten Übertragungskanal (BCH1) erste Planungsinformationen, die den zweiten Planungsinformationen entsprechen, zu erwerben, wobei die ersten Planungsinformationen zumindest eines von einem Sendeort und einem Sendezeitraum der zweiten Planungsinformationen auf dem zweiten Übertragungskanal (BCH2) umfassen, oder ein Übereinstimmungsmodul (55), das konfiguriert ist, um mit einer Funknetzwerk-Steuereinrichtung auf zumindest einem von einem Ort und einem Zeitraum der zweiten Planungsinformationen in den Systeminformationen, die auf dem zweiten Übertragungskanal (BCH2) getragen werden, auf dem zweiten Übertragungskanal (BCH2) übereinzustimmen,
ein Planungsinformationserwerbsmodul (52), das konfiguriert ist, um zweite Planungsinformationen von dem zweiten Übertragungskanal (BCH2) zu erwerben, der durch das Bestimmungsmodul (51) bestimmt wird, wobei das Planungsinformationserwerbsmodul (52) insbesondere konfiguriert ist, um jeweils die zweiten Planungsinformationen gemäß dem zumindest einen von dem Sendeort und dem Sendezeitraum zu lesen, die durch das Planungsinformationsführungserwerbsmodul (54) erworben werden, oder um die zweiten Planungsinformationen auf dem zweiten Übertragungskanal (BCH2) gemäß dem zumindest einen von dem Ort und dem Zeitraum, mit Übereinstimmung des Übereinstimmungsmoduls (55), der zweiten Planungsinformationen auf dem zweiten Übertragungskanal (BCH2) zu erwerben, wobei die zweiten Planungsinformationen in einem Planungsblock (SB3) enthalten sind, der auf dem zweiten Übertragungskanal (BCH2) getragen wird; und
ein Inhalterwerbsmodul (53), das konfiguriert ist, um Inhalt des Planungsblocks (SB3) zu erwerben und gemäß dem Inhalt des Planungsblocks (SB3) einen spezifischen Systeminformationsblock (SIBx, SIBy, SIBz) zu empfangen, der auf dem zweiten Übertragungskanal (BCH2) gesendet wird.

8. Benutzergerät nach Anspruch 7, wobei das Bestimmungsmodul (51) ferner konfiguriert ist, um gemäß lokal gespeicherten Informationen über den zweiten Übertragungskanal (BCH2) zu bestimmen, dass der zweite Übertragungskanal (BCH2) vorhanden ist.

9. Benutzergerät nach Anspruch 8, wobei das Bestimmungsmodul (51) insbesondere konfiguriert ist, um den zweiten Übertragungskanal (BCH2) gemäß einem gespeicherten Kanalisierungscode des zweiten Übertragungskanals (BCH2) zu erfassen.

10. Benutzergerät nach Anspruch 7, wobei das Bestimmungsmodul (51) ferner konfiguriert ist, um gemäß Angabeinformationen, die in den Systeminformationen auf dem ersten Übertragungskanal (BCH1) enthalten sind, zu bestimmen, dass der zweite Übertragungskanal (BCH2) vorhanden ist.

11. Benutzergerät nach Anspruch 10, wobei
die Angabeinformationen eine Kennung umfassen, die verwendet wird, um anzugeben, dass der zweite Übertragungskanal (BCH2) vorhanden ist.

12. Benutzergerät nach Anspruch 10, wobei
die Angabeinformationen Konfigurationsinformationen des zweiten Übertragungskanals (BCH2) umfassen.

13. Computerspeichermedium, wobei das Computerspeichermedium ein Programm speichert; wobei das Programm Anweisungen umfasst, um die Vorrichtung nach Anspruch 7-12 dazu zu veranlassen, die Schritte der Verfahrensansprüche 1-6 auszuführen.

## Revendications

1. Procédé d'ordonnancement de données système consistant à :
déterminer (S110), par un équipement utilisateur, l'existence d'un second canal de diffusion (BCH2) qui est différent d'un premier canal de diffusion (BCH1) ;
acquérir, par l'équipement utilisateur à partir de données système sur le premier canal de diffusion (BCH1), des premières données d'ordonnancement correspondant à des secondes données d'ordonnancement, dans lequel les premières données d'ordonnancement comprennent au moins un parmi un emplacement d'envoi et une période d'envoi des secondes données d'ordonnancement sur le second canal de diffusion (BCH2), ou convenir, par l'équipement utilisateur, avec un contrôleur de réseau radio d'au moins un parmi un emplacement d'envoi et une période d'envoi pour envoyer les secondes données d'ordonnancement sur le second canal de diffusion (BCH2) ;
acquérir (S111), par un équipement utilisateur, les secondes données d'ordonnancement, en fonction de l'au moins un parmi l'emplacement d'envoi et la période d'envoi des secondes données d'ordonnancement, dans lequel les secondes données d'ordonnancement sont transportées dans un bloc d'ordonnancement (SB3) supporté sur le second canal de diffusion (BCH2) ; et
acquérir (S112), par l'équipement utilisateur, un contenu du bloc d'ordonnancement (SB3) et recevoir, en fonction du contenu du bloc d'ordonnancement (SB3), un bloc de données système spécifique (SIBx, SIBy, SIBz) qui est envoyé sur le second canal de diffusion (BCH2).

2. Procédé d'ordonnancement de données système selon la revendication 1, dans lequel la détermination de l'existence du second canal de diffusion (BCH2) qui est différent du premier canal de diffusion (BCH1) comprend :
la détermination, par l'équipement utilisateur, en fonction de données stockées localement concernant le second canal de diffusion (BCH2), de l'existence du second canal de diffusion (BCH2).

3. Procédé d'ordonnancement de données système selon la revendication 2, dans lequel l'équipement utilisateur détecte le second canal de diffusion (BCH2) en fonction d'un code de découpage en canaux stocké du second canal de diffusion (BCH2).

4. Procédé d'ordonnancement de données système selon la revendication 1, dans lequel la détermination de l'existence du second canal de diffusion (BCH2) qui est différent du premier canal de diffusion (BCH1) comprend :
la détermination, en fonction de données d'indication transportées dans les données système sur le premier canal de diffusion (BCH1), de l'existence du second canal de diffusion (BCH2).

5. Procédé d'ordonnancement de données système selon la revendication 4, dans lequel
les données d'indication comprennent un identificateur utilisé pour indiquer l'existence du second canal de diffusion (BCH2).

6. Procédé d'ordonnancement de données système selon la revendication 4, dans lequel
les données d'indication comprennent des données de configuration du second canal de diffusion (BCH2).

7. Équipement utilisateur, comprenant :
un module de détermination (51), configuré pour déterminer l'existence d'un second canal de diffusion (BCH2) qui est différent d'un premier canal de diffusion (BCH1) ;
un module (54) d'acquisition de guide de données d'ordonnancement configuré pour acquérir, à partir des données système sur le premier canal de diffusion (BCH1), des premières données d'ordonnancement correspondant aux secondes données d'ordonnancement, dans lequel les premières données d'ordonnancement comprennent au moins un parmi un emplacement d'envoi et une période d'envoi des secondes données d'ordonnancement sur le second canal de diffusion (BCH2), ou un module d'accord (55), configuré pour convenir avec un contrôleur de réseau radio d'au moins un parmi un emplacement et une période des secondes données d'ordonnancement, dans les données système supportées sur le second canal de diffusion (BCH2), sur le second canal de diffusion (BCH2),
un module (52) d'acquisition de données d'ordonnancement, configuré pour acquérir des secondes données d'ordonnancement à partir du second canal de diffusion (BCH2) qui est déterminé par le module de détermination (51), dans lequel le module (52) d'acquisition de données d'ordonnancement est configuré spécifiquement pour lire les secondes données d'ordonnancement en fonction de l'au moins un parmi l'emplacement d'envoi et la période d'envoi acquis par le module (54) d'acquisition de guide de données d'ordonnancement ou pour acquérir les secondes données d'ordonnancement sur le second canal de diffusion (BCH2) en fonction de l'au moins un parmi l'emplacement et la période, convenus par le module d'accord (55), des secondes données d'ordonnancement sur le second canal de diffusion (BCH2), respectivement, dans lequel les secondes données d'ordonnancement sont transportées dans un bloc d'ordonnancement (SB3) supporté sur le second canal de diffusion (BCH2) ; et
un module (53) d'acquisition de contenu, configuré pour acquérir un contenu du bloc d'ordonnancement (SB3), et recevoir, en fonction du contenu du bloc d'ordonnancement (SB3), un bloc de données système spécifique (SIBx, SIBy, SIBz) qui est envoyé sur le second canal de diffusion (BCH2).

8. Équipement utilisateur selon la revendication 7, dans lequel le module de détermination (51) est en outre configuré pour déterminer, en fonction de données stockées localement concernant le second canal de diffusion (BCH2), l'existence du second canal de diffusion (BCH2).

9. Équipement utilisateur selon la revendication 8, dans lequel le module de détermination (51) est configuré spécifiquement pour détecter le second canal de diffusion (BCH2) en fonction d'un code de découpage en canaux stocké du second canal de diffusion (BCH2).

10. Équipement utilisateur selon la revendication 7, dans lequel le module de détermination (51) est en outre configuré pour déterminer, en fonction de données d'indication transportées dans les données système sur le premier canal de diffusion (BCH1), l'existence du second canal de diffusion (BCH2).

11. Équipement utilisateur selon la revendication 10, dans lequel
les données d'indication comprennent un identificateur utilisé pour indiquer l'existence du second canal de diffusion (BCH2).

12. Équipement utilisateur selon la revendication 10, dans lequel
les données d'indication comprennent des données de configuration du second canal de diffusion (BCH2).

13. Support de stockage informatique, dans lequel le support de stockage informatique stocke un programme ; le programme comprenant des instructions pour amener le dispositif selon les revendications 7 à 12 à exécuter les étapes du procédé selon les revendications 1 à 6.
